(19) **Europäisches Patentamt**
**European Patent Office**
**Office européen des brevets**

(11) Numéro de publication : **0 436 425 B1**

(12) **FASCICULE DE BREVET EUROPEEN**

(45) Date de publication du fascicule du brevet :
**28.07.93 Bulletin 93/30**

(51) Int. Cl.$^5$ : **B64G 1/36**

(21) Numéro de dépôt : **90403721.5**

(22) Date de dépôt : **20.12.90**

(54) **Dispositif de contrôle d'attitude par voiles solaires pour satellite stabilisé autour de trois axes.**

(30) Priorité : **29.12.89 FR 8917479**

(43) Date de publication de la demande :
**10.07.91 Bulletin 91/28**

(45) Mention de la délivrance du brevet :
**28.07.93 Bulletin 93/30**

(84) Etats contractants désignés :
**DE ES GB IT NL**

(56) Documents cités :
**DE-A- 2 537 577**
**FR-A- 2 530 046**
**FR-A- 2 643 871**
**US-A- 3 339 863**

(73) Titulaire : **AEROSPATIALE Société Nationale Industrielle**
**37, Boulevard de Montmorency**
**F-75781 Paris Cédex 16 (FR)**

(72) Inventeur : **Flament, Patrick**
**32, Chemin des Vallons**
**F-06110 Le Cannet (FR)**

(74) Mandataire : **Rinuy, Santarelli**
**14, avenue de la Grande Armée**
**F-75017 Paris (FR)**

EP 0 436 425 B1

Jouve, 18, rue Saint-Denis, 75001 PARIS

## Description

L'invention concerne un dispositif pour le contrôle de l'attitude en roulis et en lacet d'un satellite, généralement stationnaire, stabilisé autour de ses trois axes, avec une possible compensation de couples perturbateurs agissant sur le satellite autour de ces trois axes.

Un satellite désigne ici tout objet artificiel évoluant dans le système solaire; cet objet pouvant être:
- sur une orbite de la terre ou d'une quelconque autre planète du système solaire,
- sur une orbite d'un satellite d'une quelconque planète du système solaire,
- sur une orbite solaire, éventuellement de transfert entre deux planètes.

On sait que, sur son orbite, un satellite est soumis à des couples perturbateurs dont les causes les plus importantes sont:
- la dissymétrie des effets de la pression de radiation solaire, due à l'incidence (différence par rapport à 90°) de l'axe de tangage (Y) du satellite par rapport au soleil, aux différences de réflectivité des éléments du satellite et aux dissymétries géométrique du satellite,
- l'action du champ magnétique local (par exemple terrestre),
- l'influence du gradient de gravité local - par exemple terrestre - (pour les orbites basses),
- l'influence aérodynamique de l'environnement (pour les orbites basses).

Aussi, il est indispensable de prévoir des moyens pour contrôler l'attitude d'un satellite sur son orbite. On connaît notamment des moyens actifs à cet effet, qui mettent respectivement en oeuvre plusieurs roues à réaction ou des tuyères à jets de gaz, mais:
- l'utilisation de tuyères à gaz, qui engendre de temps à autre de brèves impulsions de correction d'attitude, entraîne de ce fait l'apparition d'excitations se répercutant sur la structure, les panneaux solaires et la partie sensible du satellite; par ailleurs, la consommation d'ergol dévolue au contrôle d'attitude alourdit la masse du satellite,
- l'utilisation de roues à réaction entraîne globalement une augmentation de la masse du satellite.

Aussi, lorsqu'on désire contrôler l'attitude d'un satellite avec le minimum de perturbations et pour un budget de masse optimal, on tire profit des forces perturbatrices dues:
- à la pression de radiation solaire (par l'orientation convenable de surfaces liées au satellite),
- ou au champ magnétique local, par exemple terrestre, (par la création de dipoles magnétiques à bord du satellite grâce à des boucles de courant).

Divers documents ont déjà proposé de tirer parti de la pression solaire pour le pilotage de l'attitude ou le maintien à poste des satellites, en utilisant des surfaces orientables à l'aide d'actionneurs spécifiques. En particulier on peut citer:
- brevet français FR-2.513.589 : PROCEDE ET DISPOSITIF POUR ALIGNER L'AXE DE ROULIS D'UN SATELLITE AVEC UNE DIRECTION DESIREE;
- brevet allemand DE-2.537.577 : LAGERREGELUNG FÜR SATELLITEN,
- brevet français FR-2.550.757 : REGULATION DE POSITION DE SATELLITES,
- brevet américain US-3.304.028 : ATTITUDE CONTROL FOR SPACECRAFT,
- brevet français FR-2.529.166 : PROCEDE DE MAINTIEN EN POSITION D'UN SATELLITE PAR LA NAVIGATION A L'AIDE DE VOILE SOLAIRE ET VEHICULE SPATIAL METTANT EN OEUVRE LE PROCEDE.

Ces solutions induisent un supplément de masse et une fiabilité réduite pour le satellite.

Un moyen plus simple de contrôler l'attitude d'un satellite stabilisé autour de ses trois axes consiste à orienter correctement des surfaces des ailes du générateur solaire (lesquelles ailes sont globalement allongées parallèlement à l'axe de tangage) à l'aide de leurs moteurs d'entraînement respectifs pour la création de couples autour de deux axes perpendiculaires contenus dans un plan (plan de la trajectoire) perpendiculaire à l'axe de tangage Y : axe solaire projeté S et axe transversal perpendiculaire P, les axes Y, S, et P définissant un trièdre direct.

Ce principe est décrit en particulier dans les documents:
- ATTITUDE CONTROL BY SOLAR SAILING - A PROMISING EXPERIMENT ON OTS 2 par Udo RENNER - ESA JOURNAL 1979, Vol 3.
- ONE YEAR OF SOLAR SAILING WITH OTS - ESA BULLETIN 31- Août 1982
- Brevet FR-2.531.547 concernant un SYSTEME DE CONTROLE D'ATTITUDE D'UN SATELLITE GEOSTATIONNAIRE
- Brevet US-4.325.124 intitulé : SYSTEM FOR CONTROLING THE DIRECTION OF THE MOMENTUM VECTOR OF A GEOSYNCHRONOUS SATELLITE
- dans un autre contexte le brevet américain n° 3.945.148 : SATELLITE ROTATION BY RADIATION PRESSURE, qui propose l'utilisation de la pression solaire sur les ailes du générateur solaire convena-

2

blement orientées pour mettre un satellite en rotation en vue de sa stabilisation par rotation.

On désignera par la suite, sous le terme "générateur solaire", l'ensemble des deux ailes du générateur solaire, étant précisé que le terme "aile de générateur solaire" désignera les ensembles qui peuvent être orientés par les moteurs d'entraînement, c'est-à-dire les ensembles constitués par:

- le générateur solaire proprement dit, c'est-à-dire les éléments à effet photovoltaïque,
- la structure qui porte l'ensemble de ces éléments,
- les mécanismes liés à cette structure qui permettent:
    . de la maintenir stockée avant que le satellite n'atteigne sa configuration orbitale,
    . de la déployer et de la maintenir déployée,
- tous les éléments additionnels qui, en configuration orbitale, sont fixés à cette structure et dont les rôles peuvent être divers. Par exemple on peut citer:
    . les volets de protection thermique qui permettent de limiter les pertes thermiques du satellite durant les phases où le générateur solaire n'est pas complètement déployé,
    . les surfaces qui permettent d'améliorer le flux lumineux reçu par les éléments photovoltaïques (par exemple les écrans d'uniformisation d'ombre).

Dans certains cas, les radiateurs déployables dont peut être équipé le satellite, peuvent être utilisés également en tant que surfaces exposées aux radiations solaires.

Les principaux avantages de ce principe résident dans l'utilisation de matériel existant déjà sur le satellite:
- les ailes du générateur solaire en tant que surface exposée aux radiations solaires,
- les moteurs d'entraînement du générateur solaire en tant qu'actionneurs.

Il présente toutefois pour inconvénient:
- de ne créer aucun couple autour de l'axe de tangage (Y) qui reste donc soumis sans compensation possible aux perturbations,
- de ne pouvoir créer de couple autour de l'axe transversal P s'il n'est pas accompagné d'un couple autour de l'axe solaire S, ce qui interdit leur utilisation pour un pilotage à toutes heures du jour de façon automatisée et empêche l'équilibrage de certaines combinaisons de couples perturbateurs,
- de ne créer un couple significatif autour de l'axe P qu'au prix d'une perte importante de puissance du générateur solaire.

Le brevet français FR-2.530.046 intitulé PROCEDE ET DISPOSITIF DE COMMANDE D'ATTITUDE POUR SATELLITE GEOSYNCHRONE propose une amélioration de ce principe par l'adjonction sur les côtés des ailes du générateur solaire d'ailettes latérales fixes symétriques par rapport à l'axe satellite-Soleil passant par le centre du satellite. Ce principe conserve l'utilisation des moteurs d'entraînement du générateur solaire en tant qu'actionneurs. Cette amélioration permet d'obtenir toutes combinaisons de couples autour des axes S et P, tout en limitant les pertes de puissance du générateur solaire à des valeurs peu contraignantes. L'inconvénient majeur de ce concept est toutefois d'ajouter systématiquement aux couples générés dans le plan roulis-lacet un couple perturbateur autour de l'axe de tangage Y, dû au décalage entre le centre des surfaces des ailettes latérales et l'axe de tangage Y. Ce couple Y admet des fluctuations parfois importantes, directement corrélées en sens et en amplitude aux variations des couples de roulis-lacet appliqués autour de l'axe P, autour d'une valeur moyenne nulle. Il s'agit donc bien d'un couple perturbateur, augmentant la consommation d'ergol et/ou la taille des roues dévolue au pilotage en tangage.

L'invention a pour objet de satisfaire non seulement les objectifs visés par le document FR-2.530.046 en ce qui concerne le contrôle d'attitude dans le plan roulis-lacet, mais de permettre en outre une compensation aussi complète que possible des perturbations extérieures autour de l'axe de tangage, sans induire de suppléments notables de masse ou de pertes de fiabilité. Elle vise ainsi à réduire l'amplitude des fluctuations, en permettant en outre un choix de la valeur moyenne de ces fluctuations à une valeur éventuellement non nulle propre à compenser en moyenne les perturbations extérieures autour de l'axe Y.

L'invention a également pour objet, pour une même surface de volets additionnels que dans le brevet FR-2.530.046 et une même amplitude maximale de dépointage par rapport au Soleil, d'augmenter les couples susceptibles d'être obtenus autour de l'axe P, permettant ainsi d'élargir la gamme des satellites susceptibles d'être pilotés en attitude grâce à la pression de radiation solaire avec notamment les avantages du brevet précité.

Elle propose à cet effet un dispositif de contrôle d'attitude pour satellite stabilisé autour de trois axes dont un axe de tangage, comportant deux ailes de générateur solaire s'étendant en sens opposés à partir d'un corps de satellite suivant deux axes respectifs longitudinaux au moins approximativement parallèles à l'axe de tangage, deux moteurs d'entraînement adaptés à commander ces ailes indépendamment l'une de l'autre en rotation autour d'axes de rotation au moins approximativement parallèles à l'axe de tangage pour maintenir ces ailes face au Soleil avec un écart de dépointage au plus égal à une valeur maximale de dépointage prédéterminée, un jeu de détecteurs adapté à relever des angles d'attitude, et une chaîne de calcul adaptée à commander les moteurs d'entraînement en fonction des angles d'attitude, caractérisé en ce qu'il comporte en outre, sur chaque aile, une surface additionnelle formée d'au moins un volet et s'étendant longitudinalement au delà de l'extrémité de cette aile, parallèlement à son axe longitudinal, ces surfaces additionnelles étant sensiblement de même aire et présentant par rapport à ces ailes des inclinaisons autour de cet axe, de sens opposés d'une aile à l'autre, et ayant au moins approximativement une même amplitude $\alpha$ inférieure au complément à 90° de cette amplitude maximale de dépointage des ailes.

Les axes longitudinaux et les axes de rotation des ailes sont souvent parallèles, voire confondus avec l'axe de tangage, mais peuvent dans certains cas de satellites, être décalés transversalement et/ou angulairement de quelques degrés (1 à 3° par exemple).

La présente invention reprend ainsi, mais dans un contexte tout à fait différent, l'idée de volets longitudinaux du brevet français n° FR-2.513.589 (précité) pour PROCEDE ET DISPOSITIF POUR ALIGNER L'AXE DE ROULIS D'UN SATELLITE AVEC UNE DIRECTION DESIREE en l'adaptant aux besoins des satellites stabilisés autour de trois axes.

La présente invention atteint (par rapport au document FR-2.530.046) des performances similaires autour de l'axe S, supérieures de 5% environ autour de l'axe P et permet, en n'apportant que peu de perturbation autour de l'axe de tangage Y, de compenser en permanence le couple moyen autour de cet axe.

On appréciera que, à la différence des deux documents cités, l'invention a notamment ceci d'original que les volets additionnels sont rapportés en une zone ponctuelle aux ailes de générateur solaire, et non tout le long d'une arête d'un panneau de celles-ci, ce que l'homme de métier avait tendance à refuser a priori en raison des difficultés apparemment insurmontables que posait le déploiement de tels volets à partir d'une configuration de stockage dans laquelle ces volets sont parallèles aux panneaux. L'invention a su surmonter ce préjugé et proposer au moins une solution technique simple et fiable à ce problème. Cela a permis une augmentation de 5% voire plus par rapport au document FR-2.530.046, des couples susceptibles d'être générés autour de l'axe P, à surface de volets et dépointage égaux.

Selon des dispositions préférées éventuellement combinées:

- l'amplitude $\alpha$ est sensiblement égale à moins de 5° près, au complément à 90° de l'amplitude maximale de dépointage des ailes,
- cette amplitude maximale de dépointage des ailes valant environ 10°, cette amplitude d'inclinaison des volets est environ de 80°,
- la surface additionnelle associée à au moins une des ailes est formée d'un volet unique,
- ces surfaces additionnelles sont globalement décalées, d'un même côté de l'axe de tangage lorsque les ailes sont coplanaires,
- les surfaces additionnelles étant chacune constituée d'un volet unique, elles sont décalées vis à vis de cet axe de tangage sur des distances au moins approximativement égales,
- le décalage vaut entre 5 et 45 % de la largeur des ailes,
- la surface additionnelle associée à au moins une aile comporte une pluralité d'au moins deux volets distincts et parallèles reliés à cette aile en étant décalés transversalement à l'axe de tangage,
- la surface additionnelle associée à au moins une aile comporte une pluralité d'au moins deux volets articulés l'un à l'autre transversalement à l'axe de tangage,
- chacune des surfaces additionnelles comporte au moins un volet ayant la forme d'un rectangle dont deux coins respectivement avant et arrière à proximité de l'aile à laquelle il est fixé, sont coupés à partir de la zone de fixation à cette aile avec des angles au moins approximativement égaux, mesurés par rapport à une arête fictive de ce volet transversale audit axe longitudinal de l'aile portant ce volet,
- les angles de découpe des coins avant et arrière sont compris entre 23 et 30°,
- chaque volet comporte un cadre sur lequel est collé une peau non tendue adaptée à absorber le rayonnement solaire,
- chacune des surfaces additionnelles est repliée avec les ailes de générateur solaire, en configuration de stockage de ces ailes.

Le fait de décomposer l'une des surfaces additionnelles en plusieurs volets articulés "en accordéon" facilite le stockage de cette aile même si elle est de grande aire.

En fait, la valeur moyenne du couple Y dépend du décalage, par rapport à l'axe de tangage, des surfaces additionnelles (prises dans leur ensemble lorsque l'une au moins des ailes comporte plusieurs volets: on peut raisonner en faisant intervenir un centre de surface défini par la barycentre des zones de fixation des divers volets affectées des aires de ces volets).

Des objets, caractéristiques et avantages de l'invention ressortent de la description qui suit, donnée à titre d'exemple non limitatif, en regard des dessins annexés sur lesquels:

- la figure 1 est une vue schématique dans l'espace d'un véhicule spatial conforme à l'invention, stabilisé autour de ses trois axes et en train de décrire une orbite autour de la Terre;
- la figure 1A est une vue de principe montrant, vues du Nord, les positions et inclinaisons des volets additionnels par rapport au plan des ailes du générateur solaire;

- la figure 2 est une vue schématique en perspective de ce satellite dans une configuration dans laquelle la pression de radiation solaire génère un couple de moulin à vent;
- la figure 3 est une vue schématique en perspective de ce satellite dans une autre configuration dans laquelle la pression de radiation solaire génère un couple de déséquilibre;
- la figure 4 est un graphique représentant les couples $C_p$ et $C_s$ réalisables du fait de la pression de radiation solaire pour divers angles d'inclinaison des ailes Nord et Sud ;
- les figures 5 et 6 sont des graphiques corrélant le couple correspondant obtenu autour de l'axe Y et l'un ou l'autre des couples $C_p$ et $C_s$ en fonction de ces angles d'inclinaison des ailes ;
- la figure 6 est un schéma synoptique d'un système de commande d'attitude en roulis et en lacet associé au satellite de la figure 1 ;
- la figure 7 est une vue partielle selon la flèche VII des figures 2 et 8 du volet associé à l'aile Nord du satellite ;
- la figure 8 en est une vue du dessus selon la flèche VIII des figures 2 et 7,
- la figure 9 est une vue en coupe dans le plan du volet du détail 1X de la figure 7;
- la figure 10 est une vue schématique montrant le volet des figures 7 et 8 en configuration de stockage entre les deux panneaux d'aile les plus éloignés du corps du satellite;
- la figure 11 en est une vue partielle en coupe selon la ligne de coupe XI-XI de la figure 10 ;
- les figures 12A à 12D sont des vues schématiques partielles des panneaux et du volet de la figure 10 dans quatre phases successives de leur déploiement relatif; et
- les figures 13A à 13C sont trois vues de détail montrant l'articulation reliant le volet au dernier panneau d'aile dans trois étapes de déploiement.

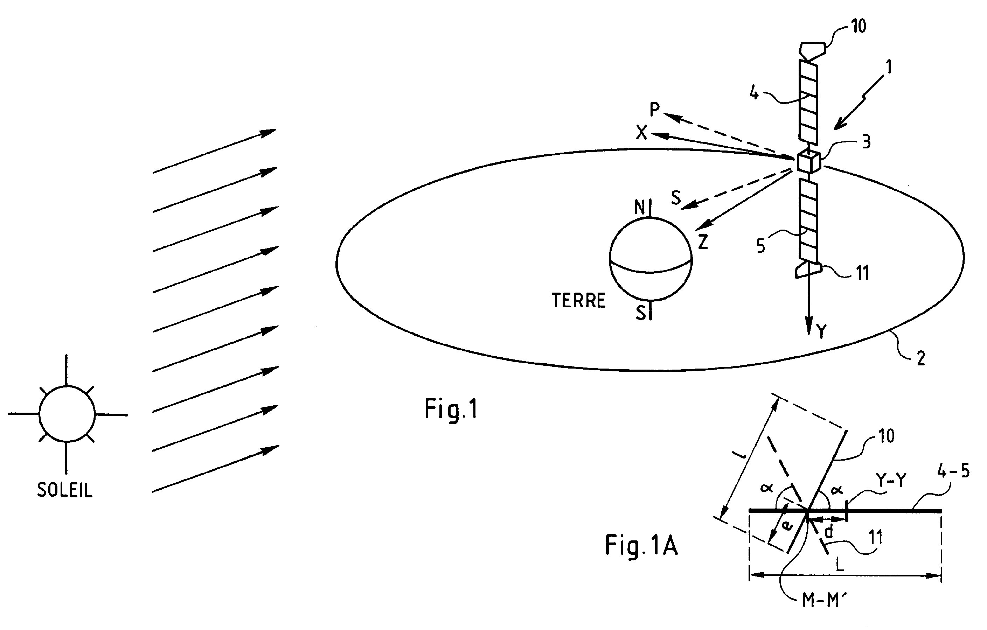

La figure 1 représente un satellite, repéré 1 dans son ensemble, en train de décrire une orbite 2 circulaire autour de la Terre.

Ce satellite comporte un corps central 3 auquel sont associés trois axes définissant un repère de référence direct lié au satellite:

. un axe X tangent à l'orbite 2 et de même sens que la vitesse de parcours de l'orbite: il est classiquement appelé axe de roulis;

. un axe Y perpendiculaire au plan de l'orbite 2 et orienté dans le sens Nord-Sud de la Terre : il est classiquement appelé axe de tangage; et

. un axe Z perpendiculaire aux axes X et Y et orienté vers la Terre : il est classiquement appelé axe de lacet.

Sur certains satellites, ce système d'axe roulis-tangage-lacet peut être orienté différemment par rapport à l'orbite et/ou la terre en fonction des impératifs liés à la mission. Dans ces cas, l'invention est également applicable même si l'orientation du satellite est variable au cours de la mission.

Ce satellite comporte un dispositif de contrôle d'attitude (voir plus loin) grâce auquel il est stabilisé le long de l'orbite 2 autour de ces trois axes.

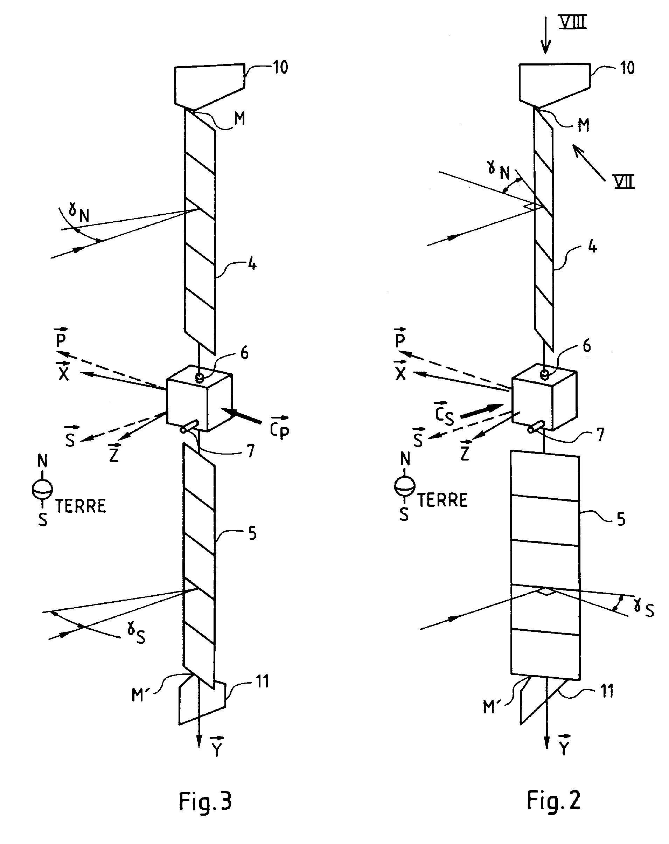

Il comporte par ailleurs (voir aussi les figures 2 et 3) un générateur solaire comportant deux ailes 4 et 5 s'étendant respectivement vers le Nord et vers le Sud suivant des axes longitudinaux, ici confondus avec l'axe Y, et orientables par rapport au corps 3, autour d'axes de rotation, ici également confondus avec l'axe Y, sous l'action de deux moteurs d'entraînement commandables séparément, de tout type connu approprié dont l'un, porté sur la face Nord du corps 3, est désigné par la référence 6 : ces moteurs sont normalement destinés à maintenir ces ailes sensiblement en regard du Soleil, perpendiculairement à ses rayons.

En pratique le satellite comporte également divers appendices (tels que antennes...) fixes ou à peu près fixes dont l'exposition à la pression de radiation solaire provoque des couples perturbateurs autour des axes X et Z qui s'ajoutent à ceux résultant d'une éventuelle dissymétrie volontaire ou non du générateur solaire. C'est ainsi que les satellites de télécommunications comportent généralement une ou plusieurs antenne(s) de transmission : la pression de radiation du faisceau de transmission entraîne un couple perturbateur autour de Y que l'invention vise à compenser en moyenne.

On définit dans le plan orbital X-Z un axe S qui est la projection dans ce plan d'un vecteur orienté depuis le satellite vers le Soleil, ainsi qu'un axe P perpendiculaire à l'axe S et tel que le repère (P, Y, S) soit direct.

Il est à noter que le repère orthonormé direct (X, Y, Z) lié au satellite tourne par rapport au repère inertiel (P, Y, S) autour de l'axe Y à raison d'un tour par orbite (un tour par jour dans le cas d'une orbite géostationnaire).

Le satellite comporte également un ensemble de détecteurs adapté à mesurer l'attitude du satellite, dont en général au moins un détecteur terrestre 7 (par exemple du type à infrarouges) adapté à mesurer l'attitude en roulis et en tangage, et le plus souvent des détecteurs solaires, voire stellaires, pour mesurer, si nécessaire, notamment l'attitude en lacet.

On ne se préoccupera dans la suite que du contrôle en attitude du satellite autour de ses axes en roulis et en lacet, le contrôle d'attitude en tangage se faisant par tout moyen connu approprié (non représenté) par exemple du type à variation du moment cinétique. Il peut également y avoir un dispositif d'amortissement de nutation qui, ne faisant pas non plus partie de l'invention, ne sera pas décrit plus en détail.

L'invention tire parti de ce que la pression de radiation solaire (ou pression solaire, en raccourci) peut, selon l'orientation des deux ailes du générateur solaire, générer deux types de couples dans le plan orbital, selon les axes S et P respectivement (on appellera dans la suite $\gamma_N$ et $\gamma_S$ les dépointages respectifs de l'aile Nord et de l'aile Sud par rapport à leur orientation nominale face au rayonnement solaire).

Les ailes du générateur solaire sont munies de surfaces additionnelles constituées dans l'exemple représenté de volets additionnels longitudinaux 10 et 11 (voir figure 1) qui permettent la création de couples de déséquilibre (autour de l'axe P), de moulin à vent (autour de l'axe S) mais aussi de tangage (autour de l'axe Y).

Ainsi que cela est représenté plus en détail à la figure 1A, ces volets additionnels sont parallèles à l'axe longitudinal de l'aile associée, c'est-à-dire ici à l'axe Y ; par rapport aux plans (ici confondus) des ailes 4 et 5 auxquelles ils sont raccordés, ces volets présentent, autour de cet axe Y, des inclinaisons sensiblement de même amplitude $\alpha$ (aux incertitudes de fabrication près) mais de sens opposés.

Si l'on désigne par Y-Y les axes longitudinaux des ailes (ici confondus avec l'axe Y), les volets sont de préférence raccordés à ces ailes en des points M et M' qui sont décalés vis à vis de cet axe Y-Y d'un même côté de celui-ci et à des distances avantageusement égales notées $\underline{d}$ à la figure 1A; ces distances (ici égales), rapportées à la dimension transversale $\underline{L}$ des ailes, définissent ainsi des proportions $\underline{r}$ égales.

Ces volets sont au moins approximativement de même surface et ont en particulier des dimensions transversales à Y-Y qui sont égales (notées $\underline{1}$). Soit $\underline{e}$ la dimension (de préférence égale pour les deux volets) dont chaque volet dépasse le plan de l'aile correspondante vers le rayonnement solaire (vers le bas à la figure 1A) ; cette dimension peut être différente de la moitié de leur dimension totale.

En conséquence, dans l'exemple représenté à la figure 1A, lorsque les ailes sont coplanaires, les projections des volets dans le plan roulis-lacet (perpendiculaire à l'axe Y) sont symétriques par rapport à un plan contenant les points M et M' et perpendiculaire au plan des ailes.

La pression solaire appliquée sur les ailes du générateur solaire entraîne un couple $C_S$ dit "de moulin à vent" (voir figure 2) si les ailes sont dépointées d'un angle identique dans des directions opposées par rapport à leur position nominale face au soleil ($\gamma_S = -\gamma_N$). Ce couple est orienté suivant la direction solaire (plus précisément suivant l'axe solaire "projeté" qu'est l'axe S).

L'orientation des volets longitudinaux étant symétrique par rapport à un plan transversal longitudinal des ailes, lors du décalage angulaire de signes opposés des deux ailes, les volets additionnels 10 et 11 présentent au Soleil une surface projetée identique.

La différence de pression solaire appliquée aux surfaces projetées des ailes du générateur solaire, du fait de l'inclinaison du Soleil par rapport au plan orbital, donc par rapport à l'axe S, conduit dans ce cas à des couples du deuxième ordre si les angles de dépointage restent faibles (ici inférieurs à 10° environ). La disposition des volets additionnels est telle que la pression due à la partie du rayonnement solaire réfléchie par ces volets entraîne un couple de moulin à vent, que l'on désire en pratique minimiser. Pour cette raison, il est recommandé que la surface des volets additionnels soit peu réfléchissante.

Pour éviter que la pression due au rayonnement réémis par les volets additionnels génère un couple de moulin à vent, il est avantageux que les émissivités de deux faces soient au moins approximativement égales.

La pression solaire appliquée aux volets additionnels entraîne un couple $C_p$ dit "de déséquilibre" (voir figure 3), si les ailes sont dépointées d'un angle identique dans le même sens par rapport à leur position nominale face au Soleil ($\gamma_S = \gamma_N$). Ce couple est dû à la différence de surface projetée que les volets additionnels présentent dans ce cas face au Soleil. Pour que ce couple soit le plus important possible, il est nécessaire que :

- leur différence de surface projetée face au Soleil soit la plus importante possible, c'est-à-dire que le plan des volets additionnels 10 et 11 soit proche de la perpendiculaire aux ailes 4 et 5 du générateur solaire ($\alpha$ proche de 90°),
- la surface présentée au Soleil les volets additionnels soit fortement absorbante,
- mais que leur orientation empêche leur face arrière d'être éclairée, c'est-à-dire que l'angle entre volets additionnels et normale aux ailes du générateur solaire (90°-$\alpha$) soit supérieur au dépointage maximal envisagé pour les ailes (cet angle vaut ainsi au plus 80° pour un dépointage maximal de 10° ; aux incertitudes de fabrication près).

Ce couple est orienté suivant la perpendiculaire à la direction solaire (c'est-à-dire l'axe P). Dans ce cas, les ailes du générateur solaire, du fait de leur disposition, présentent au Soleil des surfaces identiques (ou presque) et ne produisent donc aucun couple.

Enfin, la pression solaire appliquée aux volets additionnels entraîne un couple $C_Y$ permanent (ou presque) autour de l'axe de tangage Y, du fait du décalage $\underline{d}$ du centre de surface des volets additionnels par rapport à l'axe de tangage Y du satellite. Ce décalage, paramètre de réglage du dispositif proposé, doit être défini avant le lancement, lors de l'étude de l'ensemble générateur solaire et volets additionnels, en fonction des résultats des études de dimensionnement des couples perturbateurs appliqués au satellite, afin d'en minimiser les effets (il est rappelé que les couples perturbateurs autour de Y varient peu et restent de même sens).

Ce couple, bien que modifié par les dépointages des ailes réalisés pour le pilotage en roulis-lacet, permet de compenser en moyenne la part connue au sol du couple perturbateur autour de l'axe de tangage Y, et donc de diminuer la quantité d'ergol ou le poids des actionneurs dévolus au pilotage en tangage.

Il est possible d'obtenir la combinaison simultanée de ces trois effets (autour des axes P, S et Y) par la sommation algébrique des décalages angulaires nécessaires aux couples autour des axes S et P, ces décalages ayant, on l'a vu, peu d'influence sur le couple permanent obtenu autour de l'axe de tangage Y.

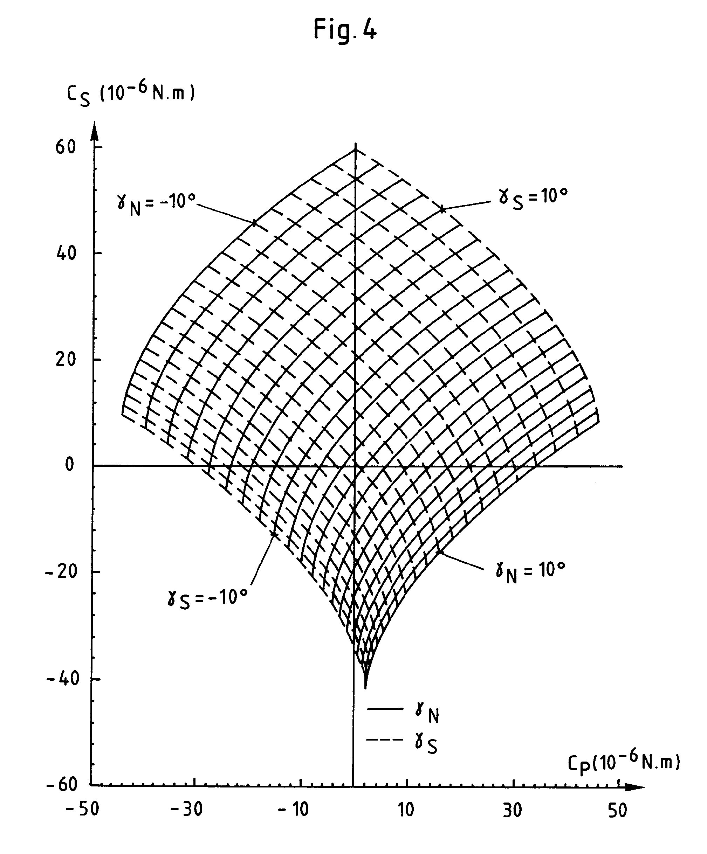

La figure 4 montre la capacité de couple autour des axes S et P d'un satellite de type EUTELSAT 2 mais modifié selon l'invention pour un dépointage des ailes maximal de 10°. On peut constater que toutes les combinaisons possibles sont réalisables.

On observe que, ainsi qu'on pouvait le prévoir d'après les remarques précitées, la surface paramétrée qui quantifie cette capacité de couple est approximativement symétrique par rapport à l'axe $C_p = 0$, tandis qu'elle est fortement asymétrique par rapport à l'axe $C_S = 0$. En particulier on vérifie que pour des dépointages de sens opposés (voir figure 2) $C_S$ devient plus important lorsque les volets additionnels tendent à s'orienter vers le Soleil, que dans le cas inverse, tandis que pour des dépointages égaux (voir figure 3) le couple $C_p$ est sensiblement de même amplitude lorsque le signe de ces dépointages est inversé.

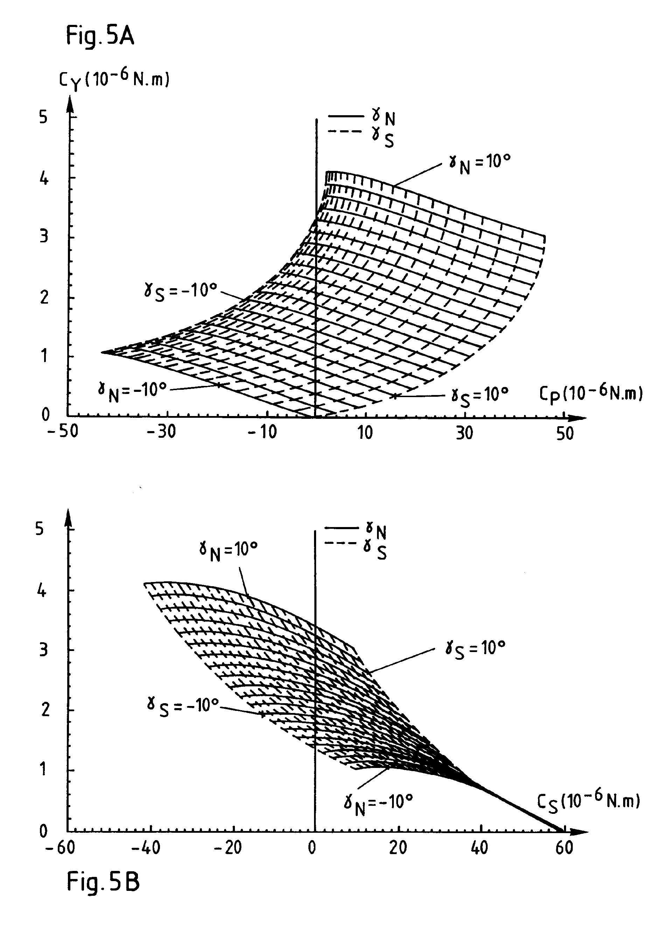

Les figures 5A et 5B montrent l'évolution du couple $C_Y$ autour de l'axe Y en fonction du couple autour des axes P et S, respectivement dans les mêmes hypothèses que la figure 4. On vérifie que le couple compensateur $C_Y$ autour de l'axe Y est modifié par les couples de pilotage autour des axes S et P sans que son signe soit modifié, ce qui, on l'a vu, permet d'utiliser sa valeur moyenne comme actionneur secondaire de la voie tangage.

Plus précisément on observe que le couple $C_Y$ varie entre 1 et $4.10^{-6}$ N.m lorsque les couples $C_p$ et $C_S$ varient entre -50 et $+50.10^{-6}$ N.m environ.

En faisant varier $\underline{d}$ on peut faire varier l'amplitude "moyenne" de $C_Y$ (ici voisine de 2) pour des plages possibles sensiblement identiques pour $C_P$ et $C_S$.

Ces figures 4, 5 et 6 correspondent, on l'a vu, à un satellite de télécommunications de type EUTELSAT 2. Les volets additionnels ont une inclinaison $\alpha$ de 80° et un décalage $\underline{d}$ valant 35 % de la dimension L, en direction opposée à P, pour une aire totale de 3,73 m2, $\underline{d}$ valait 0,55 m et $\underline{L}$ valait 1,55 m.

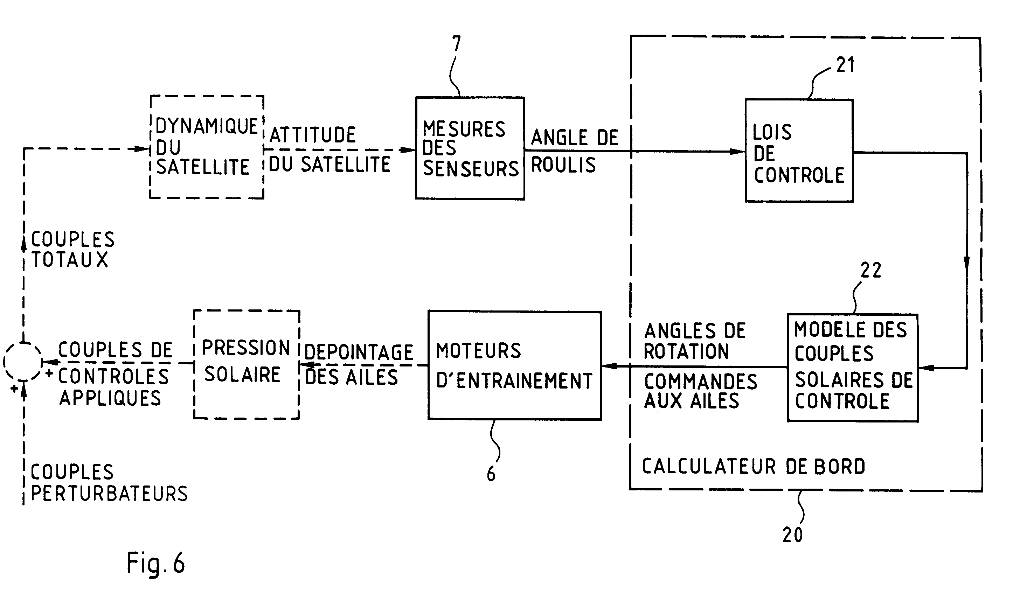

Les couples solaires créés dans le plan roulis-lacet peuvent être utilisés pour piloter l'attitude du satellite suivant une logique comparable à celle qui est résumée dans la figure 6.

Cette logique est fondée sur le fait que, connaissant les valeurs d'angles de roulis et/ou de lacet, donnés notamment par le détecteur terrestre 7, on sait déterminer les couples de pilotage qu'il faut commander pour ramener, le cas échéant, ces angles à des valeurs de consigne déterminées ou déterminables de façon connue. Connaissant l'inclinaison instantanée du rayonnement solaire (caractérisé par l'axe S) dans un repère lié au satellite, on sait, grâce à la surface paramétrée de la figure 4, déduire les valeurs de dépointage $\gamma_N$ et $\gamma_S$ qu'il faut appliquer aux ailes pour générer, au moins de façon approchée du fait de la pression de radiation solaire, les couples nécessaires.

Sur cette figure 6 :
- la référence 20 représente une zone de calcul faisant partie du calculateur de bord, mais pouvant en variante être partagée entre ce calculateur de bord et un calculateur au sol, voire entièrement située dans ce dernier,
- la référence 21 désigne, au sein de la zone 20, un bloc dans lequel sont stockées les lois connues adaptées à calculer à partir des angles de roulis et/ou de lacet les couples nécessaires au pilotage autour des axes X et Z,
- la référence 22 est un bloc dans lequel est stocké un algorithme de calcul correspondant au graphique de la figure 4 et qui est adapté à en déduire les angles de dépointage, et les ordres de commande à appliquer pour cela aux moteurs d'entraînement.

Pour de plus amples détails on pourra se référer à la demande de brevet français 89-15732 déposée le 29 Novembre 1989 sur une invention du même inventeur, étant précisé que ce procédé de pilotage ne fait pas, en soi, partie de la présente invention.

Dans cette figure 6 les éléments et lignes matériels sont représentés en traits pleins tandis que les phénomènes physiques qui interviennent sont en traits pointillés.

Les volets additionnels 10 et 11 doivent :
- être les plus légers possibles pour la surface la plus grande possible,
- présenter au Soleil une surface fortement absorbante et peu réfléchissante,
- être orientés de façon que leur normale fasse un angle de 80° environ avec celle des ailes du générateur solaire,

- être stockés et déployés sans gêner le générateur solaire,
- ne pas ombrer les éléments photovoltaïques du générateur solaire,
- ne pas être ombrés par ce générateur solaire,
- présenter des émissivités sensiblement égales sur leurs deux faces.

Ces volets sont similaires de sorte que la suite de la description portera principalement le volet 10 porté en bout de l'aile Nord 4.

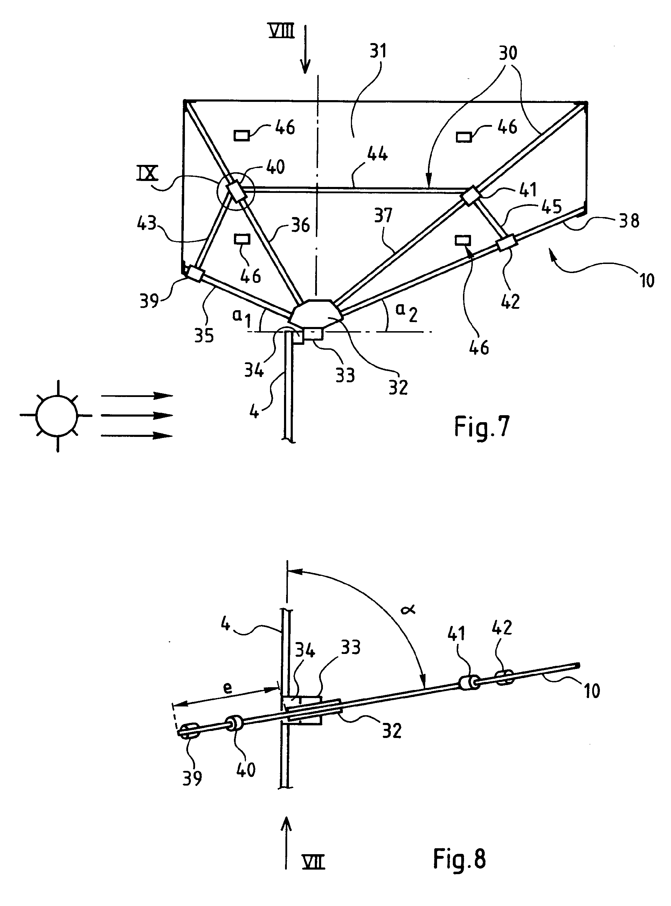

Ainsi qu'il ressort des figures 7 à 9, le volet additionnel 10 comporte un cadre de rigidification 30 sur lequel est collée une peau non tendue 31 en "KAPTON" recouverte d'un fin film noir de tout type connu approprié (par exemple un film de peinture noire). Ce cadre comporte un insert de base 32 relié à l'arête extrême de l'aile 4 par une articulation 33 qui sera décrite plus loin, elle-même reliée à un insert de bordure 34 raccordé à ce cadre.

Les dimensions du volet (parallèlement et perpendiculairement à l'axe Y) sont inférieures (de peu) à celles des panneaux 4A, 4B... constitutifs de l'aile 4 afin de rester dans l'encombrement de celle-ci durant le lancement. En pratique, les dimensions précitées valent entre 90 et 95 % des dimensions correspondantes des panneaux.

La forme du volet est imposée par le cadre 30, qui comporte ici quatre "rayons" 35, 36, 37, 38, s'étendant vers quatre coins. Le premier de ces rayons, 35, est formé d'un seul tube terminé par un insert 39, tandis que les autres rayons sont formés de deux tubes raccordés bout à bout par des inserts 40, 41 et 42. Le cadre est rigidifié par des tubes de rigidification 43, 44 et 45 qui s'étendent d'un insert à l'autre.

Ce volet a la forme d'un rectangle similaire aux panneaux, dont on a coupé, à partir de l'insert de base 32, les coins les plus proches du panneau 4A pour éviter, lors des solstices (inclinaison maximale du soleil par rapport au plan orbital):

- que les panneaux solaires externes viennent ombrer les volets additionnels, ce qui modifierait la surface exposée au rayonnement solaire de l'un d'eux et provoquerait un couple de déséquilibre indésirable,
- que les volets additionnels viennent ombrer le panneau solaire externe ce qui nuirait à la puissance électrique du générateur solaire.

C'est ainsi que le rayon 35 le plus court, en partie dirigé vers le Soleil, fait un angle $a_1$ par rapport à l'arête transversale fictive du rectangle précité, si celui-ci était complet, tandis que le rayon 38 fait un angle $a_2$. Ces angles sont sensiblement égaux ; ils ont une valeur au moins égale à la déclinaison maximale prévisible (23,5° pour un satellite géostationnaire) en lui étant peu supérieure pour ne pas perdre inutilement de la surface.

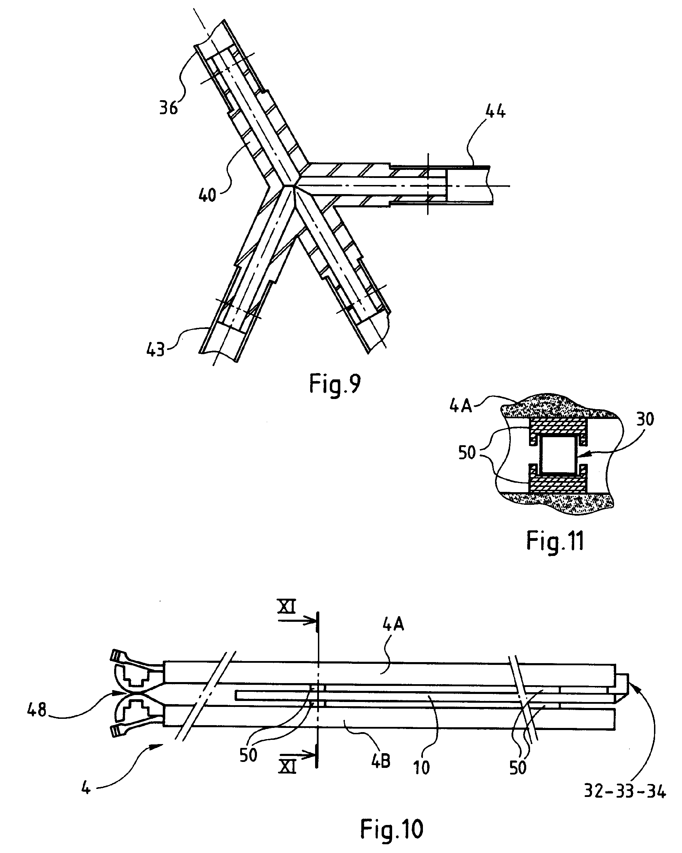

Ainsi que cela apparaît à la figure 9, l'insert 40 comporte quatre tronçons creux rentrant dans les tubes constitutifs du rayon 36 et les tubes 43 et 44. Les autres inserts sont de même structure générale.

A titre d'exemple, les divers tubes du cadre sont en fibres de carbone bobinées, et les inserts 32, 34, et 39 à 42 sont en aluminium.

Des orifices 46 sont ménagés dans la peau 31 : ils sont destinés au passage des tirants de gerbage destinés à maintenir parallèles les divers panneaux de l'aile en configuration de stockage avant déploiement.

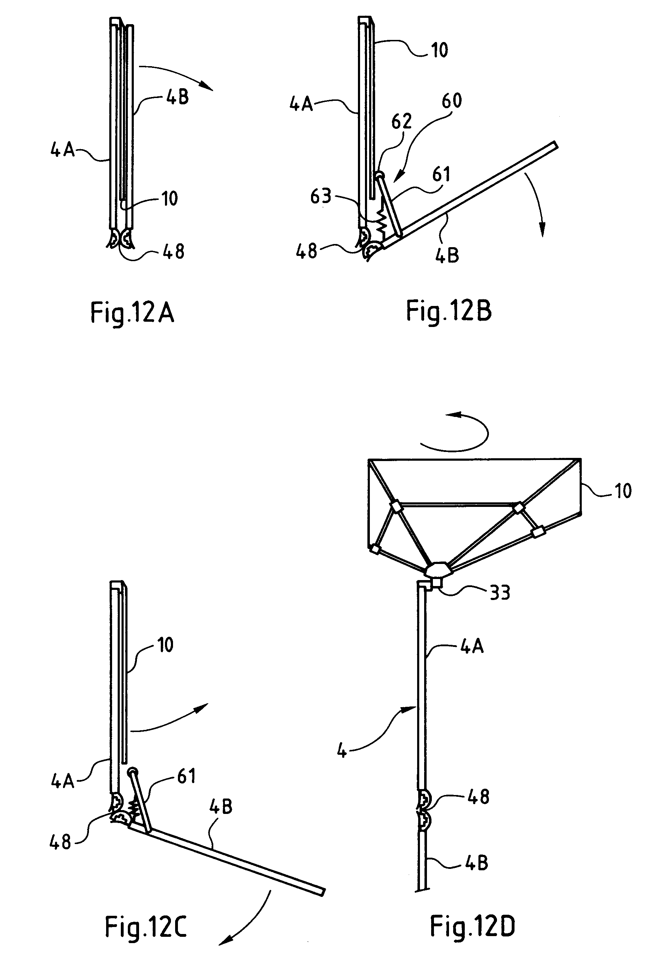

Cette configuration de gerbage est représentée aux figures 10 et 11 : le volet 10 y est engagé entre le panneau 4A le plus éloigné, en configuration déployée, du corps du satellite, et le panneau 4B qui le précède en lui étant relié par une articulation 48 de tout type connu approprié. Le cadre tubulaire 30 y est maintenu en place par des cales 50 en élastomère liées aux faces en regard des panneaux 4A et 4B. Cette disposition présente les avantages suivants :

- elle permet la fixation des volets additionnels sur les panneaux solaires,
- elle n'empêche pas la production de puissance électrique par le panneau externe, tant que le générateur solaire reste replié,
- elle n'entraîne pas d'augmentation d'encombrement du générateur solaire dont le volume est en général limité par la coiffe du lanceur.

Les figures 12A à 12D représentent quatre phases successives du déploiement de l'aile 4 et du volet 10. Pour des raisons de lisibilité et compte tenu de ce qu'aucun des éléments représentés ne garde une orientation fixe, on a choisi arbitrairement de garder le panneau 4A dans une même orientation d'une figure à l'autre.

A partir de la figure 12A (configuration stockée) le panneau 4B s'écarte du panneau 4A. A la figure 12B on voit un organe de séquencement 60 (ici constitué d'un bras 61 articulé sur le panneau 4B, terminé par un galet 62 qui roule sur le cadre du volet 10 et soumis à l'action d'un ressort 63) qui n'autorise le déploiement du volet 10 vis à vis du panneau 4A (voir figure 12C) qu'après que l'angle entre les panneaux 4A et 4B soit devenu suffisant pour éviter toute collision entre volet 10 et panneau 4A.

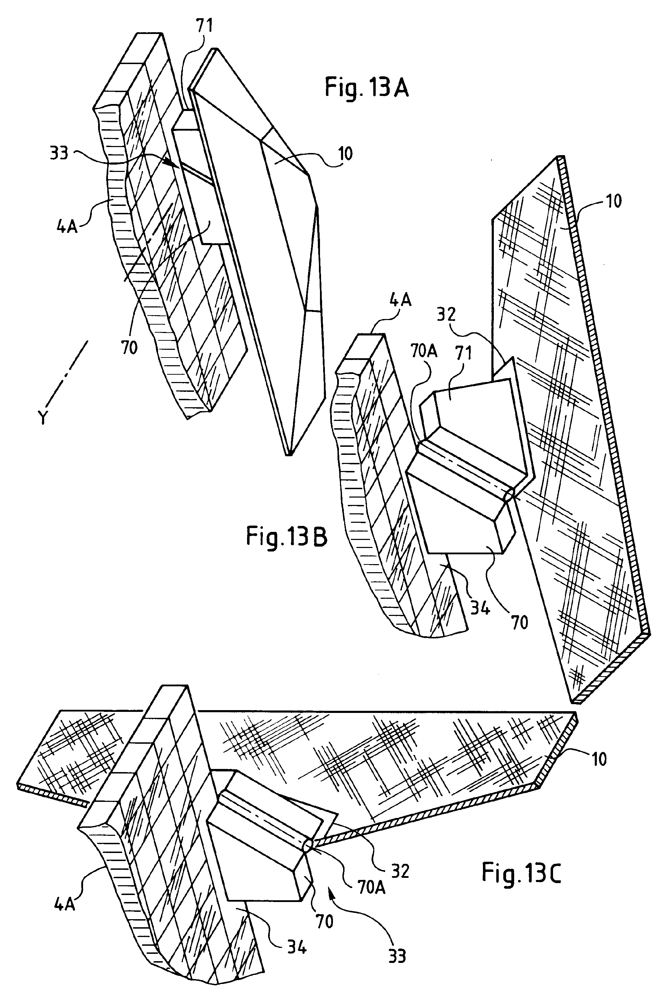

Le détail de fonctionnement de l'articulation 33 est donné aux figures 13A à 13C. Cette articulation est du type charnière dont les deux parties trapézoïdales 70 et 71 sont raccordées respectivement au panneau solaire 4A par l'insert 34 et au volet additionnel 10 par l'insert 32 ; l'axe d'articulation 70A de la charnière est d'orientation perpendiculaire à l'axe de l'aile de générateur solaire et incliné par rapport à celle-ci d'un angle β. Cet axe d'articulation est disposé le long d'arêtes bordant des tranches inclinées des pièces 70 et 71 qui sont affrontées en configuration repliée, et des faces transversales affrontées en configuration dépliée.

La motorisation de cette articulation n'est pas représentée et peut être de tout type connu, par exemple un ressort spirale bandé convenablement en torsion, parallèle à l'axe 70A, entre les parties 70 et 71 de l'articulation. Il est également possible d'assurer la fonction de motorisation par une lame souple de type joint de CARPENTIER qui assure également la fonction de guidage en rotation et permet de supprimer l'axe 70A de la charnière.

Le déploiement se fait en une seule phase depuis la figure 13A jusqu'à la figure 13C, l'orientation de l'axe 70A ayant été choisie pour atteindre la position finale désirée à partir de la position initiale sans interférence entre le panneau solaire 4A et le volet additionnel 10.

Les figures 13A à 13C présentent trois dispositions successives du déploiement, le panneau 4A ayant été représenté arbitrairement fixe.

L'angle β que fait l'axe 70A avec le plan du panneau 4A est défini en fonction de l'inclinaison finale du volet α (ici β = α/2). Des variantes de réalisation sont bien sûr aisément à la portée de l'homme de métier, en prenant des surfaces d'affrontement inclinées entre le demi-rectangle 70 et l'insert 34.

Pour un satellite de type EUTELSAT 2 équipé de la présente invention la précision de pilotage sur l'axe de roulis (X) est égale à 0.004 degré et la précision de pilotage sur l'axe de lacet (Z) est égale à 0.2 degré :
- pour une perte de puissance du générateur solaire de:

```
. 0.5  % maximum          )
                          ) sur l'aile la plus dépointée
. 0.15 % en moyenne       )
```

- en présence de couples perturbateurs de l'ordre de:
  . 5. 10-6 Newton.mètre liés aux axes satellite
  . 6.5 10-6 Newton.mètre liés aux axes soleil (axes inertiels)
  . 1.5 10-6 Newton.mètre en deuxième harmonique par rapport à la période orbitale
- pour une perte de masse de 1 kilogramme environ due à l'ajoût des deux volets en extrémité des ailes du générateur solaire.

Sur EUTELSAT 2 durant les 7 ans de durée de vie du satellite, le contrôle d'attitude consomme environ : 9 kilogrammes d'ergol pour le pilotage en roulis-lacet et 0.8 kilogramme d'ergol pour la désaturation de la roue de pilotage en tangage.

L'utilisation de la présente invention représente donc une économie potentielle de 8.8 kilogrammes environ, pour une perte de puissance électrique négligeable devant les marges de puissance électrique nécessaires pour faire face à la dégradation du générateur solaire et aux variations saisonnières de l'ensoleillement (solstices et éclipses lors des équinoxes).

Il va de soi que la description qui précède n'a été proposée qu'à titre d'exemple non limitatif et que de nombreuses variantes peuvent être proposées par l'homme de l'art sans sortir du cadre de l'invention. Ainsi les volets 10 et 11 peuvent être remplacés par plusieurs volets plus petits, décalés transversalement à l'axe de tangage, ou parallèlement à cet axe (montage en accordéon similaire à celui de l'aile elle-même) et ayant conjointement la même aire. En fait, comme on cherche en pratique à utiliser des surfaces additionnelles d'aire aussi grande que possible, il est avantageux d'utiliser plusieurs volets de taille à peine inférieure à celle des panneaux solaires entre lesquels on les replie en configuration de stockage. On a vu que les volets liés au panneau solaire terminal présentent des découpes (angle de 23,5° dans le cas d'un satellite géostationnaire, augmentée de la valeur maximale de l'inclinaison de l'orbite que l'on prévoît de laisser prendre au satellite); mais celles-ci peuvent être supprimées (sauf pour le premier) dans le cas d'une succession de volets articulés dans le prolongement de l'aile.

## Revendications

1. Dispositif de contrôle d'attitude pour satellite stabilisé autour de trois axes dont un axe de tangage (Y), comportant deux ailes (4, 5) de générateur solaire s'étendant en sens opposés à partir d'un corps de satellite (3) suivant deux axes respectifs longitudinaux au moins approximativement parallèles à l'axe de tangage, deux moteurs d'entraînement (6) adaptés à commander ces ailes indépendamment l'une de l'autre en rotation autour d'axes de rotation au moins approximativement parallèles à l'axe de tangage pour maintenir ces ailes face au Soleil avec un écart de dépointage au plus égal à une valeur maximale de dépointage prédéterminée, un jeu de détecteurs (7) adapté à relever des angles d'attitude, et une chaîne de calcul (21, 22) adaptée à commander les moteurs d'entraînement en fonction des angles d'attitude, caractérisé en ce qu'il comporte en outre, sur chaque aile, une surface additionnelle (10, 11) formée d'au moins un volet et s'étendant longitudinalement au delà de l'extrémité de cette aile, parallèlement à son axe longitudinal, ces surfaces additionnelles étant sensiblement de même aire et présentant par rapport à ces ailes des inclinaisons autour de cet axe (Y), de sens opposés d'une aile à l'autre, et ayant au moins approximativement une même amplitude $\alpha$ inférieure au complément à 90° de cette amplitude maximale de dépointage des ailes.

2. Dispositif selon la revendication 1, caractérisé en ce que l'amplitude $\alpha$ est sensiblement égale à moins de 5° près, au complément à 90° de l'amplitude maximale de dépointage des ailes.

3. Dispositif selon la revendication 2, caractérisé en ce que cette amplitude maximale de dépointage des ailes valant environ 10°, cette amplitude d'inclinaison des volets est environ de 80°.

4. Dispositif selon l'une quelconque des revendications 1 à 3, caractérisé en ce que la surface additionnelle associée à au moins une des ailes est formée d'un volet unique.

5. Dispositif selon l'une quelconque des revendications 1 à 4, caractérisé en ce que ces surfaces additionnelles sont globalement décalées, d'un même côté de l'axe de tangage lorsque les ailes sont coplanaires.

6. Dispositif selon la revendication 5, caractérisé en ce que les surfaces additionnelles étant chacune constituée d'un volet unique, elles sont décalées vis à vis de cet axe de tangage sur des distances au moins approximativement égales ($\underline{d}$).

7. Dispositif selon la revendication 6, caractérisé en ce que le décalage ($\underline{d}$) vaut entre 5 et 45% de la largeur (L) des ailes.

8. Dispositif selon l'une quelconque des revendications 1 à 7, caractérisé en ce que la surface additionnelle associée à au moins une aile comporte une pluralité d'au moins deux volets distincts et parallèles reliés à cette aile en étant décalés transversalement à l'axe de tangage.

9. Dispositif selon l'une quelconque des revendications 1 à 7, caractérisé en ce que la surface additionnelle associée à au moins une aile comporte une pluralité d'au moins deux volets articulés l'un à l'autre transversalement à l'axe de tangage.

10. Dispositif selon l'une quelconque des revendications 1 à 9, caractérisé en ce que chacune des surfaces additionnelles comporte au moins un volet ayant la forme d'un rectangle dont deux coins respectivement avant et arrière à proximité de l'aile à laquelle il est fixé, sont coupés à partir de la zone de fixation (M, M') à cette aile avec des angles ($a_1$, $a_2$) au moins approximativement égaux, mesurés par rapport à une arête fictive de ce volet transversale audit axe longitudinal de l'aile portant ce volet.

11. Dispositif selon la revendication 10, caractérisé en ce que les angles ($a_1$, $a_2$) de découpe des coins avant et arrière sont compris entre 23 et 30°.

12. Disposition selon l'une quelconque des revendications 1 à 11, caractérisé en ce que chaque volet comporte un cadre sur lequel est collé une peau non tendue adaptée à absorber le rayonnement solaire.

13. Dispositif selon l'une quelconque des revendications 1 à 12, caractérisé en ce que chacune des surfaces additionnelles est repliée avec les ailes de générateur solaire, en configuration de stockage de ces ailes.

**Patentansprüche**

1. Vorrichtung zur Steuerung der Lage eines um drei Achsen, darunter eine Nickachse (Y), stabilisierten Satelliten mit zwei Solargeneratorflügeln (4, 5), die sich von einem Satellitenkörper (3) aus in entgegengesetzten Richtungen längs zweier zur Nickachse wenigstens annähernd paralleler Längsachsen erstrecken, zwei Antriebsmotoren (6) zum Drehantrieb dieser Flügel voneinander unabhängig um Drehachsen, die wenigstens annähernd zur Nickachse parallel sind, um die Flügel mit einer Richtabweichung von höchstens gleich einem vorbestimmten Richtabweichungshöchstwert der Sonne zugewandt zu halten, einem Satz Detektoren (7) zur Messung der Lagewinkel und einer Rechenkette (21, 22) zur Steuerung der Antriebsmotoren in Abhängigkeit von den Lagewinkeln, dadurch gekennzeichnet, daß sie ferner an jedem Flügel eine zusätzliche Fläche (10, 11) besitzt, die von wenigstens einer Klappe gebildet ist und sich in Längsrichtung über das Ende dieses Flügels hinaus parallel zu seiner Längsachse erstreckt, wobei diese zusätzlichen Flächen im wesentlichen gleiche Flächenausdehnungen haben und bezüglich der Flügel Neigungen um diese Achse (Y) besitzen, die von Flügel zu Flügel entgegengesetzt gerichtet sind und wenigstens annähernd gleiche Amplitude $\alpha$ haben, die kleiner als der Ergänzungswinkel zu 90° dieser Höchstamplitude der Richtabweichung der Flügel ist.

2. Vorrichtung nach Anspruch 1, dadurch gekennzeichnet, daß die Amplitude $\alpha$ im wesentlichen auf 5° genau gleich dem Ergänzungswinkel zu 90° der Höchstamplitude äer Richtabweichung der Flügel ist.

3. Vorrichtung nach Anspruch 2, dadurch gekennzeichnet, daß wenn die Höchstamplitude der Richtabweichung der Flügel etwa 10° beträgt, die Amplitude der Neigung der Klappen etwa 80° beträgt.

4. Vorrichtung nach einem der Ansprüche 1 bis 3, dadurch gekennzeichnet, daß die wenigstens einem der Flügel zugeordnete zusätzliche Fläche von einer einzigen Klappe gebildet ist.

5. Vorrichtung nach einem der Ansprüche 1 bis 4, dadurch gekennzeichnet, daß diese zusätzlichen Flächen insgesamt auf dieselbe Seite der Nickachse versetzt sind, wenn die Flügel koplanar sind.

6. Vorrichtung nach Anspruch 5, dadurch gekennzeichnet, daß die zusätzlichen Flächen, wenn sie jeweils aus einer einzigen Klappe bestehen, bezüglich dieser Nickachse um wenigstens annähernd gleiche Distanzen (d) versetzt sind.

7. Vorrichtung nach Anspruch 6, dadurch gekennzeichnet, daß die Versetzung (d) 5 bis 45 % der Breite (L) der Flügel beträgt.

8. Vorrichtung nach einem der Ansprüche 1 bis 7, dadurch gekennzeichnet, daß die wenigstens einem Flügel zugeordnete zusätzliche Fläche eine Vielzahl von wenigstens zwei getrennten und parallelen Klappen umfaßt, die mit diesem Flügel verbunden sind, indem sie quer zur Nickachse versetzt sind.

9. Vorrichtung nach einem der Ansprüche 1 bis 7, dadurch gekennzeichnet, daß die wenigstens einem Flügel zugeordnete zusätzliche Fläche eine Vielzahl von wenigstens zwei Klappen umfaßt, die quer zur Nickachse aneinander angelenkt sind.

10. Vorrichtung nach einem der Ansprüche 1 bis 9, dadurch gekennzeichnet, daß jede der zusätzlichen Flächen wenigstens eine Klappe umfaßt, die die Form eines Rechtecks hat, von dem zwei Ecken, ein hinteres und ein vorderes, in Nähe des Flügels, an dem sie befestigt ist, ausgehend von der Zone (M, M') der Befestigung an diesem Flügel in wenigstens annähernd gleichen Winkeln ($a_1$, $a_2$) abgeschnitten sind, die bezüglich einer gedachten Kante dieser Klappe gemessen werden, die sich quer zur Längsachse des diese Klappe tragenden Flügels erstreckt.

11. Vorrichtung nach Anspruch 10, dadurch gekennzeichnet, daß die Schnittwinkel ($a_1$, $a_2$) dieses vorderen und hinteren Ecks 23 bis 30° betragen.

12. Vorrichtung nach einem der Ansprüche 1 bis 11, dadurch gekennzeichnet, daß jede Klappe einen Rahmen umfaßt, an den eine nicht gespannte Haut angeklebt ist, die die Sonnenstrahlung absorbieren kann.

13. Vorrichtung nach einem der Ansprüche 1 bis 12, dadurch gekennzeichnet, daß jede der zusätzlichen Flächen in Speicherkonfiguration der Solargeneratorflügel mit diesen Flügeln zusammengeklappt ist.


**Claims**

1. An attitude control device for a satellite stabilised on three axes including a pitch axis (Y), comprising two solar generator wings (4, 5) extending in opposite directions away from a satellite body (3) on two respective longitudinal axes at least approximately parallel to the pitch axis, two drive motors (6) adapted to control the said wings independently from each other in rotation about axes of rotation which are at least approximately parallel to the pitch axis, so as to maintain the said wings in facing relationship to the Sun and with a depointing angle which is at most equal to a predetermined maximum depointing value, a set of sensors (7) adapted to detect attitude angles, and a computing system (21, 22) adapted to control the drive members according to the attitude angles, characterised in that it further includes, on each wing, an additional surface (10, 11) defined by at least one vane and extending longitudinally beyond the end of the said wing, parallel to its longitudinal axis, the said additional surfaces being of substantially the same surface area and having, with respect to the said wings, inclinations about the said axis (Y) in opposite directions as between one wing and the other, and having at least approximately the same value smaller than the angle, complementary to 90°, of the said maximum depointing angle of the wings.

2. A device according to Claim 1, characterised in that the amplitude is substantially equal, to within 5°, to the angle complementary to 90° of the maximum depointing angle of the wings.

3. A device according to Claim 2, characterised in that, the said maximum depointing angle of the wings having a value of about 10°, the said angle of inclination of the vanes is about 80°.

4. A device according to any one of Claims 1 to 3, characterised in that the additional surface associated with at least one of the wings is defined on a single vane.

5. A device according to any one of Claims 1 to 4, characterised in that the said additional surfaces are generally offset on one common side of the pitch axis when the wings are coplanar.

6. A device according to Claim 5, characterised in that, each additional surface comprising a single vane, they are offset with respect to the said pitch axis by distances ($\underline{d}$) which are at least approximately equal.

7. A device according to Claim 6, characterised in that the offset ($\underline{d}$) is between 5 and 45% of the width (L) of the wings.

8. A device according to any one of Claims 1 to 7, characterised in that the additional surface associated with at least one wing includes a plurality of at least two separate and parallel vanes, joined to the said wing and being offset transversely to the pitch axis.

9. A device according to any one of Claims 1 to 7, characterised in that the additional surface associated with at least one wing includes a plurality of at least two vanes articulated to each other transversely to the pitch axis.

10. A device according to any one of Claims 1 to 9, characterised in that each of the additional surfaces includes at least one vane having the shape of a rectangle, two corners of which, namely a front and rear corner respectively, close to the wing to which it is secured, are cut away starting from the zone (M, M') secured to the said wing, at at least approximately equal angles ($a_1$, $a_2$), measured with respect to a notional edge of the said vane transverse to the said longitudinal axis of the wing carrying the said vane.

11. A device according to Claim 10, characterised in that the angles of cut ($a_1$, $a_2$) of the front and rear corners lie between 23 and 30°.

12. A device according to any one of Claims 1 to 11, characterised in that each vane comprises a frame on which there is adhesively secured an unstretched skin adapted to absorb solar radiation.

13. A device according to any one of Claims 1 to 12, characterised in that each of the additional surfaces is folded up with the solar generator wings when the said wings are in a stowed configuration.

Fig.1

Fig.1A

Fig.3

Fig.2

# Fig. 4

Fig. 5A

Fig. 5B

Fig. 6

EP 0 436 425 B1

VIII

31    30

46    46

IX    40

44

43    36    37    41    45    38

39    46    46    42    10

35    $a_1$    $a_2$

34    33    32

4

Fig. 7

4    $\alpha$

34    33    41    42

e    10

32

39    40

VII    Fig. 8

Fig.9

Fig.11

Fig.10

Fig.12A

Fig.12B

Fig.12C

Fig.12D

Fig. 13A

Fig. 13B

Fig. 13C